# EUROPEAN PATENT APPLICATION

(11) **EP 4 749 989 A1**
(43) Date of publication of application: **27.05.2026**
(21) Application number: 24215340.1
(22) Date of filing: 26.11.2024
(51) Int. Cl.: H04L 9/08, G06F 21/60, G06F 9/54, G06F 15/167

(54) **SECURE COMMUNICATION OF SOFTWARE COMPONENTS OVER UNSECURE MEMORY**

(71) Applicant: ABB SCHWEIZ AG, 5400 Baden (CH)
(72) Inventor: KOZHAYA, David, 8953 Dietikon (CH); GOETTEL, Christian, 5442 Fislisbach (CH)
(74) Representative: Maiwald GmbH

(57) **Abstract**

A method (100) for transferring data (4) between at least one sending software component (2a-2f) and at least one receiving software component (3a-3f) in an industrial control system (1), comprising the steps of:
• establishing (110) a shared secret (5) that is known both to the at least one sending software component (2a-2f) and to the receiving software component (3a-3f);
• determining (120), based at least in part on the shared secret (5), a memory location (6a-6e) in a memory (6) that is accessible both to the sending software component (2a-2f) and to the receiving software component (3a-3f);
• writing (140), by the sending software component (2a-2f), the to-be-transferred data (4) to the determined memory location (6a-6e); and
• reading (150), by the receiving software component (3a-3f), the to-be-transferred data (4) from the determined memory location (6a-6e).

## Description

### FIELD OF THE INVENTION

The invention relates to securing the communication between different software components of an industrial control system against denial-of-service attacks, in particular in the use case of protection and control, P&C, in an electrical substation.

### BACKGROUND

Electrical substations are equipped with protection and control, P&C, functionality that is designed to disconnect the electrical substation from an upstream feeder of electrical energy, or from a downstream consumer of electrical energy, in case of an abnormal operating situation. The goal is to isolate any problems before they spread further through the electricity distribution grid.

In the past, P&C functions running on substation relays followed a monolithic design that would only allow for a limited degree of configuration with respect to deployment scenarios and customer demands. However, the trend today is shifting towards virtual relays and on-demand P&C, where customers can choose what P&C products they need and the hardware resources to run them. For this reason, there is a fundamental need to step away from monolithic designs and move to architectures that support scale down and scale out scenarios. Therefore, P&C functions are now implemented in a modular manner with multiple software components that communicate with each other. At the same time, there is a desire to protect the intellectual property of the P&C algorithms, i.e., not to disclose them to the user. To this end, some software components are moved to trusted execution environments, TEE, where they run in isolation from other software components and from a host computing system. That is, users can enjoy the benefit of the running software components, but they are prevented from looking inside them. Having some software components running in TEEs inherently limits communication between software components. In particular, if such communication needs to be performed over non-secure memory, it is prone to denial-of-service attacks that deliberately corrupt the conveyed information.

### OBJECTIVE OF THE INVENTION

It is therefore an objective of the invention to increase the security of communication between software components of an industrial control system against denial-of-service attacks even in a situation where such communication needs to be performed over non-secure memory as the communication medium.

This objective is achieved by a method according to the main claim. Further advantageous embodiments are detailed in the dependent claims.

### DISCLOSURE OF THE INVENTION

The invention provides a method for transferring data between at least one sending software component and at least one receiving software component. This method avails itself of a memory where the sending software component can write and the receiving software component can read.

In the course of the method, a shared secret that is known both to the at least one sending software component and to the receiving software component is established. For example, this shared secret may be distributed by an orchestrating entity to all software components among which particular data is to be communicated. By virtue of knowing the shared secret, the one or more sending software components and the one or more receiving software components form a virtual "channel". Each software component may be part of multiple such "channels". For example, one software component may share one set of variables with one set of further software components, and share another set of variables with another set of further software components. Likewise, one and the same software component may be in multiple sets of software components who are entitled to receive respective sets of variables, so it may get the union set of these sets of variables.

Based at least in part on the shared secret, a memory location in a memory that is accessible both to the sending software component and to the receiving software component is determined. Because both the sending software component and the receiving component know the shared secret, they can both determine the memory location independently of each other and still arrive at the same result.

The memory location may, for example, be determined in the form of a physical or logical memory address. But the memory location may also, for example, represent a selection of one out of several discrete slots, bins or other partitions of a memory that is then translated into a physical or logical memory address further downstream. Any suitable mapping function may be used for determining the memory location. In particular, this mapping function may be made public to all software components of the industrial control system.

The sending software component writes the to-be-transferred data to the determined memory location. The receiving software component reads the to-be-transferred data from the determined memory location. In this manner, the data travels, via the memory location, from the sending software component to the receiving software component.

Herein, the receiving software component may learn in any suitable manner that there is new data available for it to read from a particular memory location. For example, the receiving software component may, for each variable that it expects to get as input, regularly poll the memory location at which it expects the value of this variable. But it is also possible, for example, to trigger, by the sending software component, the receiving component to fetch, from the memory location, the value that the sending software component has just written to this memory location.

Even though the memory itself may be non-secure, the derivation of the memory address from the shared secret makes it considerably more difficult to deliberately disrupt the communication from the sending software component to the receiving software component by corrupting the to-be-transferred data in memory. If this data is at a random location in memory, attackers do not know where they have to write in order to selectively disrupt the communication of this data. It can be anywhere within a large total space of memory. The only practical way to disrupt the communication would be to destroy the whole contents of the memory. But such a large-scale attack would be immediately obvious, i.e., it could not be carried out covertly. That is, the industrial control system would cease functioning altogether. Figuratively speaking, it is not necessary to lock the door to the memory location if the door is hidden somewhere within a vast jungle and mounting an expedition to find it is beyond the financial resources of anybody who might be interested in what is behind the door.

This is in some way analogous to the relative safety of services with publicly reachable but not published IPv6 addresses compared to services that have publicly reachable but not published IPv4 addresses. The complete IPv4 address space can be scanned for systems exposing a particular service in a matter of hours to days. But in the IPv6 address space, the density of addresses that are actually in use is many orders of magnitude lower. If an IPv6 network has a 64-bit prefix, meaning that it comprises 2⁶⁴ addresses, and massive scanning power can scan 100,000 addresses per second, an exhaustive scan of the network still takes about 5.8 million years.

One reason why an attacker might want to selectively disrupt the communication between certain software components is privilege escalation. For example, if communication between an access control system and an authentication backend is disrupted, then the access control system might allow the attacker (electronic or physical) access although the attacker has not presented valid credentials.

Another reason in the context of control systems for substations is deliberate sabotage with the intention of causing physical damage to the substation. For example, in a situation where a line is to be switched off, first a power switch that is able to cut off a high load current is switched off. Then a separator switch that is to provide a visible cue of the switched-off state is opened in the load-less state. If an attacker manages to disrupt the switching off of the power switch without the control system getting to know this, the separator switch will open under the full load. The slowly separating contacts of the separator switch will form a powerful hot arc that is likely to destroy the separator switch, and possibly other equipment as well.

In a particularly advantageous embodiment, the memory location is determined also based at least in part on further information that is determined on startup and/or at run-time of the industrial control system, and that is known both to the sending software component and to the receiving software component. In this manner, the memory location is made less predictable. In particular, the memory location will not be the same on each startup of the control system, and when it is re-computed at runtime, it will come out somewhere completely different. This makes it still harder for an attacker to selectively disrupt a particular communication between given software components.

In a further particularly advantageous embodiment, the further information on which the determining of the memory location is to be based comprises a global uniquely changing parameter known at least to the sending software component and to the receiving software component. In this manner, the concrete memory location is made even harder to predict. In particular, one and the same piece of data may jump from one memory location to another in an unpredictable manner.

For example, the global uniquely changing parameter comprises a value that monotonically increases with the time and/or another predetermined property and/or criterion. By suitably post-processing this further information, e.g. with a hash function, the monotonic increase may still translate to a totally unpredictable, pseudo-random change of the memory location.

In a further particularly advantageous embodiment, the memory location is re-computed at each time step of a given time schedule. In this manner, by virtue of a common time base, both the sending software component and the receiving software component get to know in an efficient manner how they need to synchronously change the memory location that they use to access a particular piece of data.

This is in some way comparable to frequency-hopping techniques for protecting radio communications. If the used frequency is again and again changed abruptly in an unpredictable manner, it is made much harder to jam, or even to listen in to, the communications. To efficiently jam the communications would require jamming the whole frequency band within which the used frequency varies, which would require much more energy and make the jamming attempt obvious.

In a further particularly advantageous embodiment, when one given software component performs a computation transaction, this software component first acts as a receiving software component and reads data from at least one memory location in the memory that is valid at one time step of the schedule. The given software component then performs a computation using the read data. The given software component then acts as a sending software component and writes at least one result of the computation to a memory location in the memory that is valid at the next time step of the schedule. In this manner, the given software component has a full time step to perform the computation transaction, and can combine both the actual computation transaction and the moving of the data from the old memory location to the new memory location. That is, no extra work is required on top of what is necessary for executing the computation transaction.

A time schedule for re-computing the memory location may, in particular, be based at least in part on a cycle time of at least one sending software component or receiving software component. In this manner, the re-computing can be made to coincide with the already given rhythm of operation of the software components. For example, the time schedule may be based on a multiple of the smallest cycle time of an involved software component.

In a particularly advantageous embodiment, the memory location is determined based at least in part on a hash value or other compressed digest of the shared secret and optionally the further information. In this manner, even if the amount of available information varies, it can always be brought to an output of the same size that can then be processed into the memory location. For example, the compressed digest may be used as an offset or other parameter to determine a memory location in a larger memory space that is, in principle, available to the industrial control system.

In a further particularly advantageous embodiment, the hash value is computed by means of a cryptographically secure hash function. This has multiple advantages:
- The memory location becomes even less predictable. Even if changes in the information that goes into the computation of the hash function are predictable, such as an incrementing of a counter of a progressing of the system time, this will cause unpredictable "erratic jumps" of the memory location. It is a main property of a cryptographically secure hash function that even the most minor changes to the input cause drastic changes to the output.
- It is very improbable that two to-be-communicated items of data will be placed at the same memory location and collide with each other. Thus, it is not strictly necessary to make a formal allocation of memory to a particular software component (or to a particular execution environment in which this software component runs) using functionality of an operating system. The overhead required for such allocations can be saved.
- It is not feasible for an attacker to, given the information with which one hash has been computed and this hash, intentionally manipulate information from which a second hash will be computed with the goal of causing that a next to-be-communicated item of data will be placed at the same memory location as a previous one, thereby causing the previous item of data to be overwritten.

In a further particularly advantageous embodiment, the memory location may be re-computed in response to detecting an unauthorized access to, or a compromise of, this memory location. In this manner, even if an attack on a "channel" between one or more sending software components and one or more receiving software components should by chance succeed, operation of this "channel" can quickly recover. For example, a compromise of the memory location may be detected by a checksum, keyed hash or other sort of message authentication on the data stored in this memory location.

In a further particularly advantageous embodiment, after determining the memory location and before writing the to-be-transferred data, a security protection is set that disallows at least one access to the memory location other than writing by the sending software component and reading by the receiving software component. This provides an additional layer of security against attacks that are not able to defeat such security protection. For example, if a malware has not yet taken over control of an operating system or hypervisor of a host computing system in full, its actions are confined by the security policies enforced by the operating system or hypervisor.

In a further particularly advantageous embodiment, the shared secret comprises a secure private nonce that is assigned to the sending software component and to the receiving software component upon startup of the industrial control system. In this manner, a set of "channels" between one or more sending software components and one or more receiving software components may be established by a central orchestrating entity.

In a further particularly advantageous embodiment, the memory is chosen to be random-access memory, RAM, that resides on a host computing system running the industrial control system, and is under the control of an operating system of the host computing system. This normal RAM may be made accessible also to software components running in secure, isolated execution environments. That is, when data is to be exchanged between multiple software components running in different such execution environments, normal RAM may be used as a sharing platform.

Therefore, in a further particularly advantageous embodiment, at least one sending software component and/or receiving software component is running in a trusted execution environment, TEE, in isolation from the host computing system and an operating system of the host computing system. This allows a user of the industrial control system to enjoy the functionality of the software component without disclosing the inner workings of this software component to such user. That is, the intellectual property of the software component may be securely locked away from attempts to decompile, disassemble or otherwise discover how the functionality of the software component is realized.

In a further particularly advantageous embodiment, the memory is divided into partitions, and write access to each such partition is restricted to one sending software component, and/or one TEE, at any given time. In this manner, collisions between simultaneous attempts to write may be prevented, and another layer of security besides the mere hiding of the "channel" in memory may be introduced. In particular, if access is granted to one complete TEE at any given time, it can be implemented that software components running within one and the same TEE trust each other.

Herein, preferably, the identity of the sending software component and/or TEE that has write access to a given partition of the memory is known at most to those receiving software components that are supposed to read data written by the sending software component. In this manner, attempts to discover (e.g., reverse-engineer) the intellectual property of the software components by analyzing the behavior of such software components in memory may be made more difficult.

In a further particularly advantageous embodiment, the memory is chosen to be of a size that is at least 100 times, preferably at least 1000 times, and most preferably at least 10000 times larger than the size of all data that is to be communicated between sending software components and receiving software components of the industrial control system at any one time. In this manner, as discussed before, attempts to identify memory locations that are used by one concrete "channel" are made more difficult. In particular, identifying a memory location used by a particular software component by analyzing the timing correlation between invocation of this software component and changes to memory contents is made harder.

In a further particularly advantageous embodiment, in response to data (4) having been sent successfully by the sending software component and received successfully by the receiving software component, the industrial control system causes a change in the physical behavior of an industrial plant or installation controlled by the industrial control system. In particular, this may happen by virtue of actuating an actor of the industrial control system that influences the physical behavior of the industrial plant or installation with an actuation signal emitted from one or more software components of the industrial control system. In this manner, the communication between software components of the industrial control system that is more secure against denial of service attacks has the beneficial effect that the physical behavior of the industrial plant or installation is more appropriate given the operating situation of the industrial plant or installation. In particular, attempts to intentionally cause a non-appropriate behavior by selectively impeding communication between particular software components, and thus selectively disabling certain functionality, may be prevented. This is particularly true in a case where at least one to-be-communicated variable is a measurement value that has been acquired using at least one sensor of the industrial plant or installation. In particular, the operating situation of the industrial plant or installation may be characterized by a plurality of such measurement values. For example, as discussed before, a deliberate sabotage attempt might relate to the execution of an action in a situation where this action should not be performed, such as opening a separator switch under the full electrical load current.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for transferring data 4 between at least one sending software component 2a-2f and at least one receiving software component 3a-3f in an industrial control system 1;
Figure 2: Exemplary embodiment of establishing a "channel" C1-C5 between one or more sending software components 2a-2f, and one or more receiving software components 3a-3f;
Figure 3: Exemplary embodiment of rotating the use of a memory location 6a-6e between different "channels" based on a time schedule.

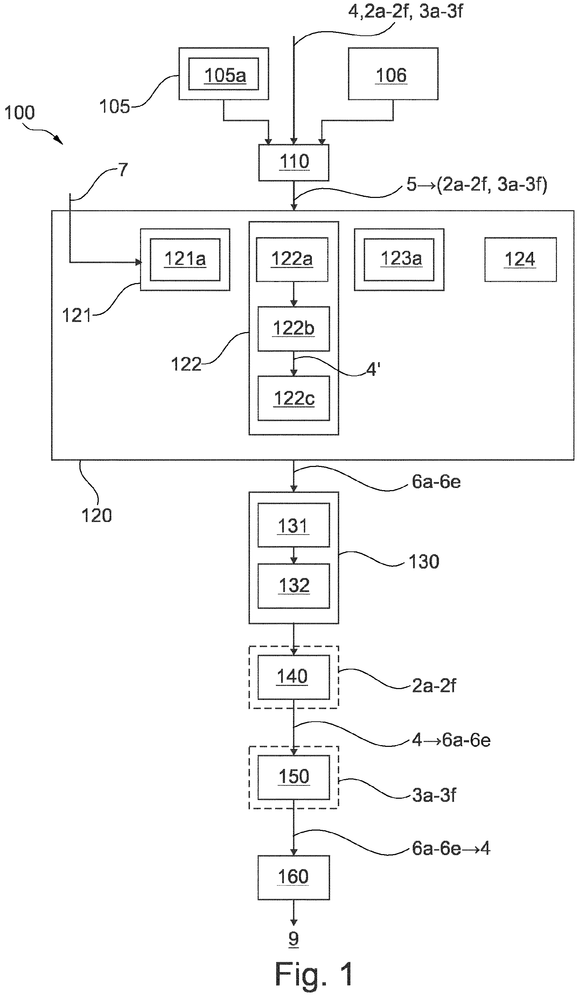

Figure 1 is a schematic flow chart of an exemplary embodiment of the method 100 for transferring data 4 between at least one sending software component 2a-2f and at least one receiving software component 3a-3f in an industrial control system 1. This method starts from a situation where a given set of data 4 is to be transferred from one or more sending software components 2a-2f to one or more receiving software components 3a-3f via a memory 6.

According to block 105, this memory 6 may be chosen to be random-access memory, RAM, that resides on a host computing system 10 running the industrial control system 1, and is under the control of an operating system of the host computing system 10.

In particular, according to block 105a, the memory 6 may be chosen to be of a size that is at least 100 times, preferably at least 1000 times, and most preferably at least 10000 times larger than the size of all data 4 that is to be communicated between sending software components 2a-2f and receiving software components 3a-3f of the industrial control system 1 at any one time. By "chosen", it is meant that this large amount of memory is made available somehow (e.g., reserved for the industrial control system 1 as a whole) so that "channels" which are each of a much smaller size may be established in some systematic manner (i.e., by means of a mapping function) and scattered within this large memory area. The bigger the range of memory, the more challenging it is for attackers to "guess" the right mapping for a channel. This is in some way analogous to expanding a given quantity of a gas into a large volume: The gas always fills up the given volume, and the size of the volume determines how sparsely the volume is populated with molecules. The larger the volume, the lower the probability that, when looking at any given place inside the volume, one will encounter a molecule.

According to block 106, at least one sending software component 2a-2f and/or receiving software component 3a-3f may run in a trusted execution environment, TEE 8a-8e, in isolation from the host computing system 10 and an operating system of the host computing system 10.

In step 110, a shared secret 5 that is known both to the at least one sending software component 2a-2f and to the receiving software component 3a-3f is established. As discussed before, this secret may be shared between multiple sending software components 2a-2f and multiple receiving software components 3a-3f.

In step 120, based at least in part on the shared secret 5, a memory location 6a-6e in a memory 6 that is accessible both to the sending software component 2a-2f and to the receiving software component 3a-3f is determined.

According to block 121, the memory location 6a-6e may be determined also based at least in part on further information 7 that is determined on startup and/or at run-time of the industrial control system 1, and that is known both to the sending software component 2a-2f and to the receiving software component 3a-3f.

According to block 121a, the further information 7 may comprise a global uniquely changing parameter known at least to the sending software component 2a-2f and to the receiving software component 3a-3f. In particular, this global uniquely changing parameter may comprise a value that monotonically increases with the time and/or another predetermined property and/or criterion.

According to block 122, the memory location 6a-6e may be re-computed at each time step of a given time schedule.

In particular, when a given software component performs a computation transaction, this given software component may:
- according to block 122a, act as a receiving software component 3a-3f, and read data 4 from at least one memory location 6a-6e in the memory 6 that is valid at one time step of the schedule;
- according to block 122b, perform a computation using the read data 4, thereby producing results 4'; and
- according to block 122c, act as a sending software component 2a-2f, and write at least one result 4' of this computation to a memory location 6a-6e in the memory 6 that is valid at the next time step of the schedule.

According to block 123, the memory location 6a-6e may be determined based at least in part on a hash value or other compressed digest of the shared secret 5 and optionally the further information 7.

In particular, according to block 123a, the hash value may be computed by means of a cryptographically secure hash function.

According to block 124, the memory location 6a-6e may be re-computed in response to detecting an unauthorized access to, or a compromise of, this memory location 6a-6e.

In the example shown in Figure 1, in step 130, i.e. after determining the memory location 6a-6e in step 120 and before writing the to-be-transferred data 4 in step 140, a security protection is set that disallows at least one access to the memory location 6a-6e other than writing by the sending software component 2a-2f and reading by the receiving software component 3a-3f.

To this end, according to block 131, the memory 6 may be divided into partitions, and according to block 132, write access to each such partition may be restricted to one sending software component 2a-2f, and/or one TEE 8a-8e, at any given time.

In step 140, the sending software component 2a-2f writes the to-be-transferred data 4 to the determined memory location 6a-6e.

In step 150, the receiving software component 3a-3f reads the to-be-transferred data 4 from the determined memory location 6a-6e.

In the example shown in Figure 1, in step 160, in response to data 4 having been sent successfully by the sending software component 2a-2f and received successfully by the receiving software component 3a-3f, the industrial control system 1 causes a change in the physical behavior of an industrial plant or installation 9 controlled by the industrial control system 1.

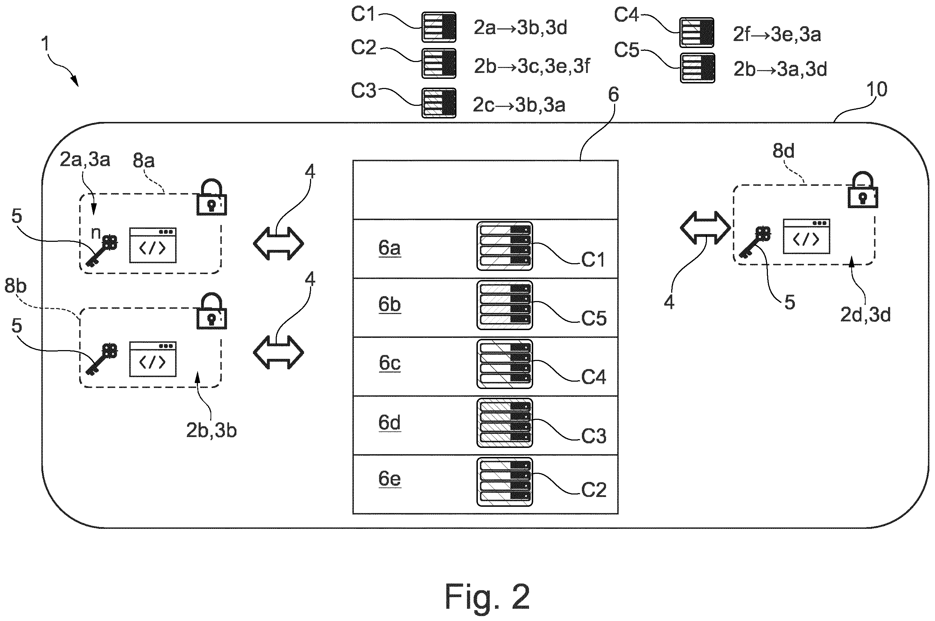

Figure 2 illustrates, on one example of an industrial control system 1, how a "channel" C1-C5 between one or more sending software components 2a-2f, and one or more receiving software components 3a-3f, may be established.

In the example shown in Figure 2, the industrial control system 1 is deployed on a host computing system 10 that has a non-secure RAM memory 6. Of the software components of the industrial control system 1, for illustration, only three are shown, namely
- a first component 2a, 3a in a first trusted execution environment, TEE 8a;
- a second component 2b, 3b in a second TEE 8b; and
- a third component 2d, 3d in a third TEE 8d.

The industrial control system 1 comprises further software components 2c, 3c; 2e, 3e; and 2f, 3f. These are not shown inside the host computing system 10 in order not to obscure how a first channel C1 is formed between the first component as sending component 2a, and the second and third components as receiving components 3b and 3d: All these three components 2a, 3b and 3d are given, in a secure manner, a shared secret 5 (here: a nonce n). Based on this shared secret 5, each component 2a, 3b, 3d can work out on its own a memory location (here: 6a) to be used for mutually exchanging data 4.

In an analogous manner,
- a second channel C2 is formed between the sending component 2b and receiving components 3c, 3e, 3f, and this second channel C2 is to use the memory location 6e;
- a third channel C3 is formed between the sending component 2c and receiving components 3b and 3a, and this third channel C3 is to use the memory location 6d;
- a fourth channel C4 is formed between the sending component 2f and receiving components 3e and 3a, and this fourth channel C4 is to use the memory location 6c; and
- a fifth channel C5 is formed between the sending component 2b and receiving components 3a and 3d, and this fifth channel C5 is to use the memory location 6b.

This example shows that one and the same components may appear in multiple channels C1-C5. For example,
- the component 2b is the sending component in both channels C2 and C5;
- the component 3b is receiving component in both channels C2 and C3;
- the component 3d is receiving component in both channels C2 and C5; and
- the component 3e is receiving component in both channels C2 and C4.

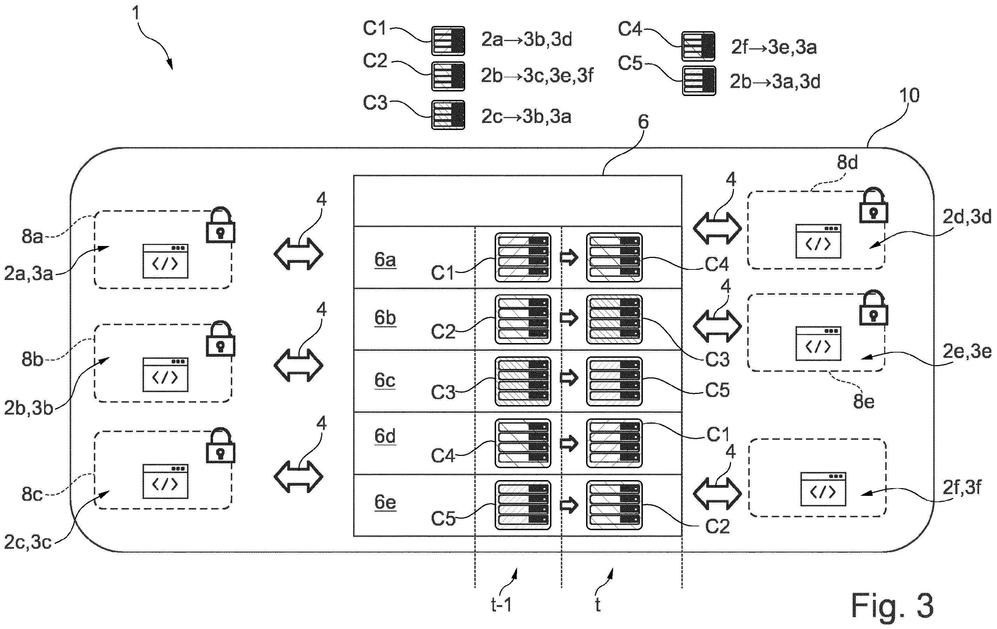

Figure 3 shows, for the same industrial control system 1 shown in Figure 2, how the assignment of memory locations 6a-6e to channels C1-C5 may vary according to a time schedule.

Compared with Figure 2, Figure 3 shows, in addition to the software components already shown in Figure 2,
- the software component 2c, 3c in another TEE 8c;
- the software component 2e, 3e in another TEE 8e; and
- the software component 2f, 3f that directly runs on the host computing system 10 without any special security encapsulation.

In the example shown in Figure 3, at a time step t-1,
- the memory location 6a is used for the channel C1,
- the memory location 6b is used for the channel C2,
- the memory location 6c is used for the channel C3,
- the memory location 6d is used for the channel C4, and
- the memory location 6e is used for the channel C5.

At time step t, this order has been permutated as follows:
- the memory location 6a is now used for the channel C4;
- the memory location 6b is now used for the channel C3;
- the memory location 6c is now used for the channel C5;
- the memory location 6d is now used for the channel C1; and
- the memory location 6e is now used for the channel C2.

As discussed before, this makes it harder to deliberately disrupt a particular channel C1-C5 selectively, or even to passively follow the communication across such channel C1-C5.

### List of reference signs:

- 1: industrial control system
- 2a-2f: sending software components in industrial control system 1
- 3a-3f: receiving software components in industrial control system 1
- 4: to-be-communicated data
- 4': computation result of computation transaction
- 5: shared secret
- 6: memory
- 6a-6e: memory locations
- 7: additional information for determining memory location 6a-6e
- 8a-8e: trusted execution environments on host computing platform 10
- 9: to-be-controlled industrial plant or installation
- 10: host computing system for implementing industrial control system 1
- 100: method for transferring data 4 from components 2a-2f to components 3a-3f
- 105: choosing RAM of host computing system 10 as memory 6
- 105a: choosing RAM of a large size
- 106: choosing software components 2a-2f, 3a-3f running in TEEs 8a-8e
- 110: establishing shared secret 5
- 120: determining memory location 6a-6e in memory 6
- 121: using further information 7 in determining memory location 6a-6e
- 121a: using global uniquely changing parameter
- 122: re-computing memory location 6a-6e according to time schedule
- 122a: receiving data 4 from memory location 6a-6e at one time step of schedule
- 122b: processing data 4 into computation results 4'
- 122c: writing results 4' to memory location 6a-6e at next time step of schedule
- 123: using hash or other compressed digest to compute memory location 6a-6e
- 123a: using cryptographically secure hash function
- 124: re-computing memory location 6a-6e on unauthorized access / compromise
- 130: setting security protection
- 131: dividing memory 6 into partitions
- 132: restricting write access to partitions to one TEE 8a-8e, component 2a-2f
- 140: writing data 4 to memory location 6a-6e
- 150: reading data 4 from memory location 6a-6e
- 160: changing physical behavior of industrial plant or installation 9
- C1-C5: channels formed between software components 2a-2f, 3a-3f

## Claims

1. A method (100) for transferring data (4) between at least one sending software component (2a-2f) and at least one receiving software component (3a-3f) in an industrial control system (1), comprising the steps of:
• establishing (110) a shared secret (5) that is known both to the at least one sending software component (2a-2f) and to the receiving software component (3a-3f);
• determining (120), based at least in part on the shared secret (5), a memory location (6a-6e) in a memory (6) that is accessible both to the sending software component (2a-2f) and to the receiving software component (3a-3f);
• writing (140), by the sending software component (2a-2f), the to-be-transferred data (4) to the determined memory location (6a-6e); and
• reading (150), by the receiving software component (3a-3f), the to-be-transferred data (4) from the determined memory location (6a-6e).

2. The method (100) of claim 1, wherein the memory location (6a-6e) is determined (121) also based at least in part on further information (7) that is determined on startup and/or at run-time of the industrial control system (1), and that is known both to the sending software component (2a-2f) and to the receiving software component (3a-3f).

3. The method (100) of claim 2, wherein the further information (7) comprises (121a) a global uniquely changing parameter known at least to the sending software component (2a-2f) and to the receiving software component (3a-3f).

4. The method (100) of claim 3, wherein the global uniquely changing parameter comprises a value that monotonically increases with the time and/or another predetermined property and/or criterion.

5. The method (100) of any one of claims 1 to 4, wherein the memory location (6a-6e) is re-computed (122) at each time step of a given time schedule.

6. The method (100) of claim 5, wherein the performing of a computation transaction comprises, by one given software component:
• reading (122a), as a receiving software component (3a-3f), data (4) from at least one memory location (6a-6e) in the memory (6) that is valid at one time step of the schedule;
• performing (122b) a computation using the read data (4); and
• writing (122c), as a sending software component (2a-2f), at least one result (4') of this computation to a memory location (6a-6e) in the memory (6) that is valid at the next time step of the schedule.

7. The method (100) of any one of claims 5 to 6, wherein the time schedule is based at least in part on a cycle time of at least one sending software component (2a-2f) or receiving software component (3a-3f).

8. The method (100) of any one of claims 1 to 7, wherein the memory location (6a-6e) is determined (123) based at least in part on a hash value or other compressed digest of the shared secret (5) and optionally the further information (7).

9. The method (100) of claim 8, wherein the hash value is computed (123a) by means of a cryptographically secure hash function.

10. The method (100) of any one of claims 1 to 9, wherein the memory location (6a-6e) is re-computed (124) in response to detecting an unauthorized access to, or a compromise of, this memory location (6a-6e).

11. The method (100) of any one of claims 1 to 10, further comprising: after determining (120) the memory location (6a-6e) and before writing (140) the to-be-transferred data (4), setting (130) a security protection that disallows at least one access to the memory location (6a-6e) other than writing by the sending software component (2a-2f) and reading by the receiving software component (3a-3f).

12. The method of any one of claims 1 to 11, wherein the shared secret (5) comprises a secure private nonce that is assigned to the sending software component (2a-2f) and to the receiving software component (3a-3f) upon startup of the industrial control system (1).

13. The method of any one of claims 1 to 12, wherein the memory (6) is chosen (105) to be random-access memory, RAM, that resides on a host computing system (10) running the industrial control system (1), and is under the control of an operating system of the host computing system (10).

14. The method of any one of claims 1 to 13, wherein at least one sending software component (2a-2f) and/or receiving software component (3a-3f) is running (106) in a trusted execution environment, TEE (8a-8e), in isolation from the host computing system (10) and an operating system of the host computing system (10).

15. The method of claims 13 and 14, wherein the memory (6) is divided (131) into partitions, and write access to each such partition is restricted (132) to one sending software component (2a-2f), and/or one TEE (8a-8e), at any given time.

16. The method of claim 15, wherein the identity of the sending software component (2a-2f) and/or TEE that has write access to a given partition of the memory (6) is known at most to those receiving software components (3a-3f) that are supposed to read data (4) written by the sending software component (2a-2f).

17. The method of any one of claims 13 to 16, wherein the memory (6) is chosen (105a) to be of a size that is at least 100 times, preferably at least 1000 times, and most preferably at least 10000 times larger than the size of all data (4) that is to be communicated between sending software components (2a-2f) and receiving software components (3a-3f) of the industrial control system (1) at any one time.

18. The method (100) of any one of claims 1 to 14, further comprising: in response to data (4) having been sent successfully by the sending software component (2a-2f) and received successfully by the receiving software component (3a-3f): causing (160), by the industrial control system (1), a change in the physical behavior of an industrial plant or installation (9) controlled by the industrial control system (1).

19. A computer program, comprising machine-readable instructions that, when executed by one or more computers and/or compute instances, cause the one or more computers and/or compute instances to perform the method (100) of any one of claims 1 to 18.

20. A non-transitory machine-readable data carrier and/or a download product with the computer program of claim 19.

21. One or more computers and/or compute instances with the computer program of claim 19, and/or with the non-transitory machine-readable data carrier and/or download product of claim 20.
